# EUROPÄISCHE PATENTANMELDUNG

(11) **EP 1 227 420 A2**
(43) Veröffentlichungstag der Anmeldung: **31.07.2002**
(21) Anmeldenummer: 01102000.5
(22) Anmeldetag: 30.01.2001
(51) Int. Cl.: G06F 17/60

(54) **Verfahren zur anwenderseitigen Konzipierung von technischen Funktionseinheiten aus Einzelkomponenten**

(71) Anmelder: Festo AG & Co, 73734 Esslingen (DE)
(72) Erfinder: Neugebauer, Alfred, Dr., 70197 Stuttgart (DE); Hinselmann, Thomas, 73733 Esslingen (DE)
(74) Vertreter: Vetter, Hans, Dipl.-Phys. Dr.

(57) **Zusammenfassung**

Es wird ein Verfahren zur anwenderseitigen Konzipierung von technischen Funktionseinheiten (V1 - V3) aus Einzelkomponenten (K1 - K3) wenigstens eines Herstellers auf einem Bildschirm eines Computers vorgeschlagen, wobei Daten, Eigenschaften, Verknüpfungen und/oder Zuordnungen der Einzelkomponenten elektronisch gespeichert und über ein Konzipierungsprogramm verknüpft werden. Das Konzipierungsprogramm erzeugt eine Auswahlmenüfolge, durch die interaktiv und menügeführt ausgehend von allgemeinen Anwendervorgaben über speziellere Anwendervorgaben wenigstens eine Konzeption für eine Funktionseinheit aus einer Mehrzahl elektronisch gespeicherter Konzeptionen automatisch ausgewählt wird, über deren Einzelkomponenten Produktinformationen abrufbar sind und/oder deren Einzelkomponenten darstellbar sind. Mit Hilfe dieses Verfahrens kann der Anwender schnell und einfach durch von ihm vorgegebene Randbedingungen die für ihn optimale technische Funktionseinheit, beispielsweise eine Anlage oder Maschine, konzipieren.

## Beschreibung

Die Erfindung betrifft ein Verfahren zur anwenderseitigen Konzipierung von technischen Funktionseinheiten aus Einzelkomponenten wenigstens eines Herstellers auf dem Bildschirm eines Computers.

Konstrukteure und Anlagenplaner nutzen bei der Lösung ihrer Aufgaben, nämlich der Konzipierung von technischen Funktionseinheiten, wie Anlagen und Maschinen, Einzelkomponenten verschiedener Lieferanten. Im täglichen Wettbewerb kommt es für die Anwender zunehmend darauf an, schnell die richtige Auswahl zu treffen, das heißt, die am besten geeignete Funktionseinheit und die am besten geeigneten Einzelkomponenten oder Baugruppen in kürzester Zeit zu finden. Dem Anwender wird heute eine kaum noch überschaubare Menge von Katalogkomponenten angeboten. Hinzu kommen noch kundenspezifische Lösungen, Baugruppen, Subsysteme und Spezialapplikationen. Auf Grund von historisch gewachsenen Typenspektren sind zum Teil Produktfamilien nebeneinandergestellt und werden nebeneinander angeboten, die sich untereinander ähneln und in ihren Leistungsdaten überlappen. Die Verwendung einschränkende Vorschriften sind oft nicht ausreichend bekannt. Die Eignung einer Einzelkomponente für den aktuellen Bedarfsfall bzw. für die spezielle Branche ist häufig nicht erkennbar. Allgemein zugängliche Verweise auf Erfahrungen und Referenzen in den unterschiedlichsten Anwendungen fehlen. Anwendungswissen und Applikationserfahrung liegen zwar als individuelles Wissen der Kunden, Vertriebsmitarbeiter, Fachberater und Fachleute des Herstellers vor, jedoch häufig punktuell und nicht jeweils in voller Breite, wobei auch Übermittlungsprobleme auftreten können.

Eine Aufgabe der vorliegenden Erfindung besteht somit darin, dem Anwender ein Hilfsmittel an die Hand zu geben, mit dessen Hilfe er die für ihn in Frage kommende Funktionseinheit erkennen und auffinden sowie zusammenstellen kann.

Diese Aufgabe wird erfindungsgemäß durch das Verfahren mit den Merkmalen des Anspruchs 1 gelöst.

Der Vorteil des erfindungsgemäßen Verfahrens besteht insbesondere darin, dass der Anwender die für ihn in Frage kommende und von ihm gesuchte Funktionseinheit gezielt auffinden kann, wobei unter der Vielzahl von Einzelkomponenten diejenigen automatisch ausgeschieden werden, die für ihn, seine Branche oder seinen speziellen Anwendungsfall nicht in Frage kommen. Er selbst kann mit Hilfe von Suchkriterien und Entscheidungsstrukturen und konkreter Argumentation zu jeder Alternative zeiteffektiv die bestgeeignete Lösung auswählen, sowohl was die Funktionseinheit insgesamt als auch deren Komponenten, Baugruppen und Teilsysteme anbetrifft. Das Anwendungswissen wird in Form von Referenzlösungen, ergänzt durch Beispiele für konkrete Dimensionierungsanforderungen, bereitgehalten. Ergänzende Bauteile, wie mechanische Befestigungen, elektrische Anschlusselemente und dergleichen, werden in passender Weise dazu vorgeschlagen. Es werden auch Produkte und Komponenten von Ergänzungsanbietern vorgeschlagen. Bezüglich Planung und Konstruktion der gesuchten Funktionseinheit werden mit einem Datenfonds alle Angaben für die Produktverwendung angeboten und die Dokumentation von Baugruppen und Einzelkomponenten automatisch bereitgestellt.

Nicht nur dem Kunden und Anwender, sondern auch den Vertriebsmitarbeitern des Herstellers wird ein leistungsfähiges Werkzeug in die Hand gegeben, durch das ein schnellerer und sichererer Zugriff auf das Erfahrungswissen und eine erleichterte Auswahl und Konzipierung der für den Anwender und sein Problem am besten geeigneten technischen Funktionseinheit ermöglicht wird. Der Anwender kann auch ohne Mithilfe des Herstellers aus der Vielzahl der angebotenen Einzelkomponenten die für ihn am besten geeignete Funktionseinheit zusammenstellen und auswählen.

Durch die in den Unteransprüchen aufgeführten Maßnahmen sind vorteilhafte Weiterbildungen und Verbesserungen des im Anspruch 1 angegebenen Verfahrens möglich.

Als Auswahlmenüfolge haben sich insbesondere die Anwendervorgaben Branche, Prozess, Teilprozess, Maschine, Funktion, Subsystem als Auswahlkriterien besonders vorteilhaft erwiesen, da der Anwender ausgehend von einer ganz allgemeinen Problemstellung gezielt zur für ihn am besten geeigneten technischen Funktionseinheit geführt wird, wobei automatisch alle Einzelkomponenten ausgeschieden werden, die für seine Branche, seine Anwendung oder sein Problem nicht geeignet sind.

Die zielgerichtete Auswahl wird auch durch Verfahrensschritte zur Darstellung, insbesondere Zeichnungsdarstellung, der ausgewählten Konzeption auf dem Bildschirm und/oder einem Drucker erleichtert, da sich mögliche Alternativen von Funktionseinheiten dadurch besser und leichter auswählen lassen.

Zweckmäßigerweise sind auch Verfahrensschritte zur Konfigurierung und/oder Dimensionierung der ausgewählten Konzeption und/oder deren Einzelkomponenten vorgesehen, so dass der Anwender auch die von ihm gewünschten Randbedingungen und technischen Details festlegen kann. Diese Konfigurierung und/oder Dimensionierung erfolgt vorzugsweise interaktiv und menügesteuert.

Vorteilhaft sind auch Verfahrensschritte zur Erstellung von Bestell-Stücklisten der Einzelkomponenten, die eine weitere Erleichterung und Vereinfachung bei der Konzipierung der am besten geeigneten technischen Funktionseinheit darstellen.

Die Durchführung des Verfahrens und der Verfahrenschritte erfolgt in vorteilhafter Weise mittels eines Computerprogramms mit Programmcodemitteln, das auf einem Computer abläuft. Dieses Computerprogramm kann in einer vorteilhaften Variante durch ein Computersystem lesbar sein, insbesondere über ein Netzwerk, wobei der Anwender den Zugriff auf das beispielsweise beim Hersteller gespeicherte Computerprogramm über ein Netzwerk wie das Internet erhält. Das Computerprogramm kann jedoch auch im Speicher eines anderen Computersystems, beispielsweise des Computersystems des Anwenders, gespeichert sein.

Das Programm kann auch in vorteilhafter Weise auf einem computerlesbaren Speichermedium gespeichert sein, beispielsweise auf Disketten oder einer CD, so dass es vertrieben und/oder den Anwendern in dieser Form zur Verfügung gestellt werden kann. Möglich ist selbstverständlich auch das Herunterladen des Programms durch den Anwender über das Internet.

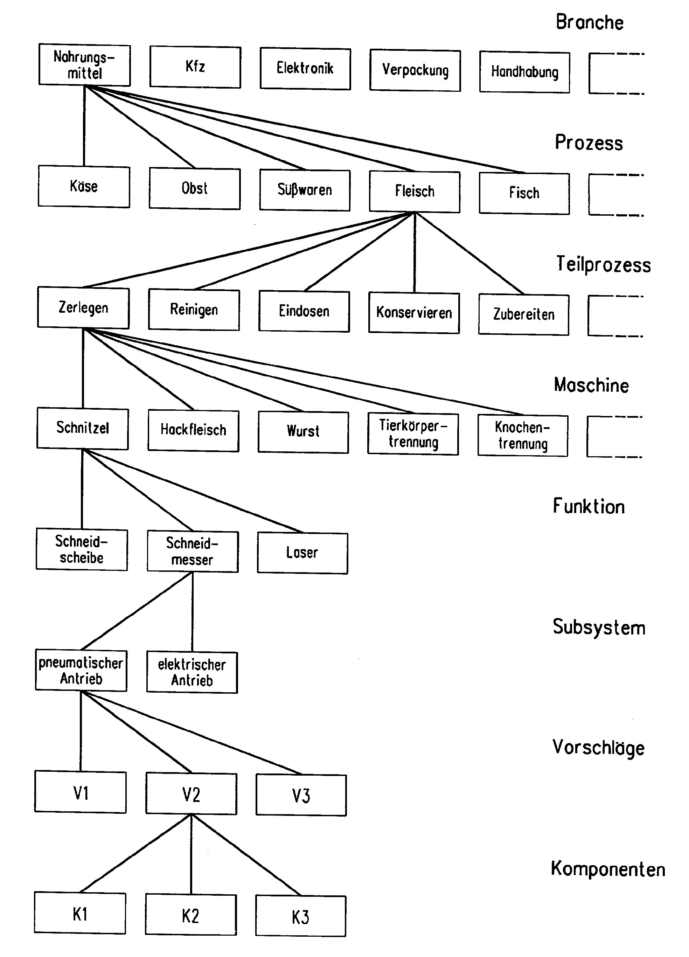

Eine Ausführungsvariante des erfindungsgemäßen Verfahrens ist in der einzigen Figur dargestellt und in der nachfolgenden Beschreibung näher erläutert.

Zur Durchführung des erfindungsgemäßen Verfahrens muss zunächst eine Vielzahl von Informationen gesammelt und in einem Computer gespeichert werden. Es handelt sich dabei um Informationen über die Produkte eines oder mehrerer Hersteller, deren Einzelkomponenten und aus diesen Produkten und Einzelkomponenten gebildete Funktionseinheiten. Diese Informationen setzen sich aus dem Produktwissen des oder der Hersteller und dem Applikationswissen über die Anwendungsbedingungen zusammen. Die einzelnen Applikationen, Produkte und Einzelkomponenten werden nun durch Merkmale beschrieben und verknüpft. Beispiel für solche Informationen sind Eignungsdaten für verschiedene Branchen, Prozesse, Teilprozesse, Maschinen, Funktionen, Subsysteme und dergleichen, Korrosionsdaten, zweioder dreidimensionale Zeichnungen, Anwendungsinformationen, Dokumentationen, Leistungsdaten, Geometriedaten, Berechnungsdaten, Anwendungsdaten, Kundenzuordnungen und dergleichen.

Die Daten der Informationen werden nun durch ein Programm zur Durchführung des Verfahrens verknüpft, wobei Entscheidungskriterien für Produktauswahl, Zuordnung usw. definiert und daraus ein Entscheidungsbaum gebildet wird, der zur interaktiven Produktauswahl geeignet ist. Dabei werden bei jedem Entscheidungsschritt diejenigen Produkte ausgeschieden, die für die gewünschte oder angestrebte Funktionseinheit nicht mehr in Frage kommen oder nicht mehr geeignet sind. Das entsprechende Programm kann laufend verfeinert und ergänzt werden, indem immer wieder neue Informationen über bereits enthaltene Produkte und Einzelkomponenten oder über neue hinzugefügt werden. In diesem Programm werden dabei Daten und Informationen aus vielerlei Richtungen aufgenommen, zum Beispiel von Vertriebsmitarbeitern eines oder mehrerer Hersteller, Hotlines, Service-Mannschaften, Produkt-Managements, Branchen-Managements, Wettbewerbsdaten, Betriebsdaten, Kunden-Wissen, Kunden-Erfahrungen und dergleichen.

Das so gebildete Programm kann Anwendern über Datenträger zur Verfügung gestellt werden, wobei die Anwender auch online, beispielsweise über das Internet, auf Computersysteme des Herstellers zugreifen können, in denen dieses Programm abläuft, so dass der Anwender das Verfahren nachvollziehen kann.

Die einzige Figur zeigt anhand eines Ausführungsbeispiels einen Verfahrensablauf, bei dem der Anwender oder auch ein Vertriebsmitarbeiter anhand von Wünschen und Randbedingungen zur Konzipierung einer technischen Funktionseinheit, beispielsweise einer technischen Anlage oder Maschine, gelangt.

Der Anwender ruft das Programm über einen Datenträger oder ein Netzwerk an seinem Computer auf, wobei er zur Erzeugung der genannten Ergebnisse direkt in jeden dazu geeigneten Verfahrensschritt springen kann. Zur Berücksichtigung aller Informationen ist es sinnvoll, als erstes auf dem Bildschirm eine Branchenwahl durchzuführen. Im Ausführungsbeispiel kann dabei zwischen den Branchen Nahrungsmittel- und Verpackungs-, Automobil-, Elektronik- und Handhabungs-Industrie gewählt werden. Die Zahl und Art der Branchen ist hier beliebig erweiterbar. Durch Mausklick oder ein anderes Auswahlverfahren wählt der Anwender nun die Nahrungsmittelbranche. Auf dem Bildschirm erscheint nun ein weiteres Auswahlmenü, mit dessen Hilfe er den spezifischen Prozess auswählen kann. Im Ausführungsbeispiel kann er zwischen der Be- bzw. Verarbeitung von Käse, Obst, Süßwaren, Fleisch und Fisch wählen. Er wählt die Fleischverarbeitung.

Nun kann er in einem weiteren Auswahlmenü zwischen den Teilprozessen Zerlegen, Reinigen, Eindosen, Konservieren und Zubereiten wählen. Er wählt nun den Teilprozess Zerlegen.

Im nächsten Auswahlmenü kann er nun die Maschine für den von ihm gewählten Zerlegungsprozess auswählen. Als beispielsweise Auswahlkriterien sind Maschinen zur Herstellung von Schnitzeln, Hackfleisch, Wurst, Tierkörpertrennung und Knochentrennung aufgeführt. Nach der Auswahl einer Maschine für die Schnitzelherstellung kann er nun die speziellere Funktion auswählen, wobei er im Ausführungsbeispiel zwischen der Schnitzelherstellung durch eine Schneidscheibe, ein Schneidmesser oder einen Laser-Schneider wählen kann.

Nach der Wahl des Schneidmessers kann er im darauffolgenden Auswahlmenü zwischen den Subsystemen Pneumatischer Antrieb oder Elektrischer Antrieb wählen, wobei er den pneumatischen Antrieb für das Schneidmesser wählt.

Nun macht ihm das Programm drei Vorschläge V1 bis V3 für pneumatisch angetriebene Schneidmesser als gewünschte technische Funktionseinheiten. Diese Vorschläge können beispielsweise durch bildliche Darstellungen, wie 3D-Darstellungen oder Konstruktionszeichnungen, auf dem Bildschirm wiedergegeben werden. Im Ausführungsbeispiel wählt er den Vorschlag V2 als die für ihn geeignetste technische Funktionseinheit aus. Nun kann er interaktiv diesen Vorschlag V2 modifizieren, konfigurieren und dimensionieren, indem er beispielsweise interaktiv die Länge des Schneidmessers, die Schnittgeschwindigkeit, die Schnittfrequenz, die Schneidekraft, den Schnitthub vorgibt und/oder die Dimensionierung auswählt bzw. vorgibt. Weiterhin kann er die einzelnen Komponenten K1 bis K3 der von ihm ausgewählten technischen Funktionseinheit auf dem Bildschirm wiedergeben und deren technische Daten abrufen. Bei diesen Komponenten handelt es sich beispielsweise um einen pneumatischen Antriebszylinder, Steuerventile, Leitungen, Halterungen, Führungen, elektrische bzw. elektronische Steuerungen und dergleichen. Die Einzelkomponenten können auch in Form von Bestell-Listen wiedergegeben und auf Wunsch ausgedruckt oder elektronisch an den Hersteller oder dessen Verkaufsorganisation übermittelt werden.

Nicht nur der Anwender, sondern auch die Vertriebsmitarbeiter des Herstellers können auf diese Weise einen für den Anwender geeignete technische Funktionseinheit herausfinden und auswählen. Durch den Auswahlprozess werden automatisch bei jedem Schritt diejenigen Einzelkomponenten ausgeschieden, die beispielsweise für die jeweilige Branche, für den jeweiligen Prozess, Teilprozess, die jeweilige Maschine oder dergleichen nicht geeignet sind. Beispielsweise können in der jeweiligen Branche, beispielsweise der Fleischbearbeitung, Vorschriften existieren, durch die verschiedene Schmierstoffe oder andere Materialien nicht zugelassen sind. Einzelkomponenten, die solche Materialien aufweisen, werden dann automatisch ausgeschieden. Zwischen verschiedenen Dimensionierungen kann selbstverständlich nur im Rahmen der zur Verfügung stehenden Einzelkomponenten gewählt werden, was ebenfalls für die technische und funktionelle Auslegung gilt.

In Abwandlung des beschriebenen Ausführungsbeispiels kann selbstverständlich die Zahl der Menü-Ebenen variieren, das heißt, es können gröbere und feinere Auswahlschritte gewählt werden. Auch die Art der Wiedergabe von Aufzeichnungen von Informationen über die ermittelten technischen Funktionseinheiten und deren Komponenten kann je nach Art und Umfang der eingegebenen Informationen, sowie dem Kreis der Anwender des Programms variieren. So kann in einer einfacheren Version das Verfahren zu Marketingzwecken bei der Wiedergabe von Vorschlägen für Funktionseinheiten enden.

## Patentansprüche

1. Verfahren zur anwenderseitigen Konzipierung von technischen Funktionseinheiten (V1 - V3) aus Einzelkomponenten (K1 - K3) wenigstens eines Herstellers auf dem Bildschirm eines Computers, wobei Daten, Eigenschaften, Verknüpfungen und/oder Zuordnungen der Einzelkomponenten elektronisch gespeichert und über ein Konzipierungsprogramm verknüpft werden, wobei das Konzipierungsprogramm eine Auswahlmenüfolge erzeugt, durch die interaktiv und menügeführt ausgehend von allgemeinen Anwendervorgaben über speziellere Anwendervorgaben wenigstens eine Konzeption für eine Funktionseinheit aus einer Mehrzahl elektronisch gespeicherter Konzeptionen automatisch ausgewählt wird, über deren Einzelkomponenten Produktinformationen abrufbar sind und/oder deren Einzelkomponenten darstellbar sind.

2. Verfahren nach Anspruch 1, **dadurch gekennzeichnet, dass** die Auswahlmenüfolge wenigstens teilweise die Anwendervorgaben Branche, Prozess, Teilprozess, Maschine, Funktion, Subsystem als Auswahlkriterien enthält.

3. Verfahren nach Anspruch 1 oder 2, **gekennzeichnet durch** Verfahrensschritte zur Darstellung, insbesondere Zeichnungsdarstellung, der ausgewählten Konzeption auf dem Bildschirm und/oder einem Drucker.

4. Verfahren nach einem der vorhergehenden Ansprüche, **gekennzeichnet durch** Verfahrensschritte zur Konfigurierung und/oder Dimensionierung der ausgewählten Konzeption und/oder deren Einzelkomponenten.

5. Verfahren nach Anspruch 4, **gekennzeichnet durch** eine interaktiv menügesteuerte Konfigurierung und/oder Dimensionierung.

6. Verfahren nach einem der vorhergehenden Ansprüche, **gekennzeichnet durch** Verfahrensschritte zur Erstellung von Stücklisten, insbesondere Bestell-Stücklisten der Einzelkomponenten.

7. Computerprogramm mit Programmcodemitteln zur Durchführung des Verfahrens und dessen Verfahrensschritte nach einem der vorhergehenden Ansprüche, wenn das Computerprogramm auf einem Computer abläuft.

8. Computerprogramm nach Anspruch 7, das durch ein Computersystem lesbar ist, insbesondere über ein Netzwerk.

9. Computerprogramm nach Anspruch 7 oder 8, das im Speicher eines Computersystems gespeichert ist.

10. Computerlesbares Speichermedium, in dem das Computerprogramm gemäß einem der Ansprüche 7 bis 9 gespeichert ist.
